Europäisches Patentamt

European Patent Office

Office européen des brevets

(11) Publication number: **0 210 450**
**B1**

(12) **EUROPEAN PATENT SPECIFICATION**

(45) Date of publication of patent specification: **08.02.89**

(21) Application number: **86108893.8**

(22) Date of filing: **30.06.86**

(51) Int. Cl.⁴: **C 09 D 3/80,** C 08 L 33/10,
C 08 L 51/00

(54) Coating film for a high luminance reflector.

(30) Priority: **01.07.85 JP 144228/85**
**02.07.85 JP 145175/85**

(43) Date of publication of application:
**04.02.87 Bulletin 87/06**

(45) Publication of the grant of the patent:
**08.02.89 Bulletin 89/06**

(84) Designated Contracting States:
**DE FR GB**

(56) References cited:
**EP-A-0 060 042**
**EP-A-0 143 991**

(73) Proprietor: **MITSUBISHI RAYON CO. LTD.**
3-19, Kyobashi 2-chome Chuo-Ku
Tokyo 104 (JP)

(72) Inventor: **Sasaki, Isao**
1665-98, Ohno-cho
Saiki-gun Hiroshima-ken (JP)
Inventor: **Yanagase, Akira**
2-5-301, Kurokawa 3-chome
Ohtake-shi Hiroshima-ken (JP)
Inventor: **Kitai, Kiyokazu**
5-19, Ogata 2-chome
Ohtake-shi Hiroshima-ken (JP)

(74) Representative: **Bühling, Gerhard, Dipl.-Chem.**
et al
**Patentanwaltsbüro Tiedtke-Bühling-Kinne**
**Grupe-Pellmann-Grams-Struif Bavariaring 4**
**D-8000 München 2 (DE)**

Courier Press, Leamington Spa, England.

Description

The present invention relates to a surface-protective coating film for a high luminance reflector with improved weather resistance and processability.

A reflective sheet is well known which comprises a weather resistant resin layer with spherical glass beads embedded therein and which has a highly reflective vapour-deposited aluminium layer on its surface. Further, U.S. Patents 3,190,178 and 4,025,159 disclose, as their improvement, a high luminance reflector wherein a layer of spherical glass beads is present between a substrate sheet and a coating film with a part of the glass beads exposed, and an air layer is present between the substrate sheet and the coating film so that the substrate film and the coating film are partially bonded to form cells.

The properties required for the coating film for such a high luminance reflector, are excellent transparency and weather resistance, since the reflector is to be used outdoors as a road sign or the like. As such a coating film, for instance, a polymethyl methacrylate film, a polycarbonate film or a polyethylene terephthalate film may be employed. Among them, the polymethyl methacrylate film is superior in the transparency and weather resistance and preferably employed.

However, in such a high luminance reflector, the substrate sheet layer and the coating film are bonded every 1 to 2 cm to form cells and to provide an air layer. Therefore, it is desired that when a crack forms on the coating film, the crack terminates within one cell. Therefore, the coating film is desired to be a strong film which hardly undergoes cracking. Namely, it is desired to be made of a film material having relatively high tensile strength (i.e. at least 3.43 kN/cm$^2$ at 20°C) and high tear strength.

Further, the high luminance reflector is used outdoors in many cases, and the coating film is required to have durability under low temperature conditions.

However, the conventional coating film made of polymethyl methacrylate has poor durability against the temperature change, and the breaking elongation of the film is small. Therefore, it was difficult to produce a film, particularly a film for a high luminance reflector. On the other hand, the polycarbonate film and the polyethylene terephthalate film are inferior in the weather resistance, and are not suitable for practical use.

Under the circumstances, various methods have been studied to improve the processability and durability by incorporating a rubber component to the polymethyl methacrylate resin. For instance, JP—A—No. 33991/1977 and No. 140161/1982 propose to use a rubber-containing multi-layer structure polymer. However, a film made solely of such a rubber-containing multi-layer structure polymer produced by the proposed technique, has a low yield strength and large breaking elongation, and it is unsuitable for use as a coating film for a high luminance reflector, since cracks are likely to form in such a coating film. Namely, the coating film for a high luminance reflector is required to have a high tensile strength (at least 3.43 kN/cm$^2$) and high tear strength [at least 1.47 N (150 g)] as well as excellent durability at low temperatures (the film elongation at 0°C being at least 5%).

The object of the present invention is to provide a coating film for a high luminance reflector which maintains excellent transparency and weather resistance and which has high durability against the temperature change and yet provides good film processability.

Under the circumstances, extensive researches have been conducted to obtain a film having transparency and elasticity required for the coating film of a high luminance reflector, which at the same time has excellent durability against the temperature change and proper film strength. As a result, it has been found that by using a blend of a certain specific rubber-containing multi-layer structure polymer and a hard resin component, it is possible to obtain good processability and durability, and at the same time it is possible to obtain high breaking strength.

The above-mentioned object is achieved according to the present invention by a coating film for a high luminance reflector obtainable by extrusion of a blend consisting essentially of [I] from 20 to 80 parts by weight of a thermoplastic polymer and [II] from 20 to 80 parts by weight of at least one rubber-containing polymer selected from multi-layer structure polymers [II-1] and [II-2] as obtained by emulsion polymerization, and having a gel content of from 10 to 50% by weight, wherein:

the thermoplastic polymer [I] is a polymer comprising from 50 to 100% by weight of an alkyl methacrylate having an alkyl group of from 1 to 4 carbon atoms and from 0 to 50% by weight of at least one other monoethylenically unsaturated monomer copolymerizable therewith;

the multi-layer structure polymer [II-1] is a rubber-containing polymer comprising

(A) an innermost polymer layer composed of (A$_1$) from 80 to 100 parts by weight of an alkyl acrylate having an alkyl group of from 1 to 8 carbon atoms or an alkyl methacrylate having an alkyl group of from 1 to 4 carbon atoms, (A$_2$) from 0 to 20 parts by weight of other monomer having a copolymerizable double bond, (A$_3$) from 0 to 10 parts by weight of a polyfunctional monomer, and (A$_4$) from 0.1 to 5 parts by weight, relative to 100 parts by weight of the total amount of (A$_1$) to (A$_3$), of a graftlinking agent and

(C) an outermost polymer layer composed of (C$_1$) from 51 to 100 parts by weight of an alkyl methacrylate having an alkyl group of from 1 to 4 carbon atoms, and (C$_2$) from 0 to 49 parts by weight of other monomer having a copolymerizable double bond, and having a glass transition temperature (Tg) of at least 40°C, as basic structural units, and

(D) zero or at least one layer of a copolymer composed of (D$_1$) from 10 to 90 parts by weight of an alkyl acrylate having an alkyl group of from 1 to 8 carbon atoms, (D$_2$) from 10 to 90 parts by weight of an alkyl

EP 0 210 450 B1

methacrylate having an alkyl group of from 1 to 4 carbon atoms, ($D_3$) from 0 to 20 parts by weight of other monomer having a copolymerizable double bond, ($D_4$) from 0 to 10 parts by weight of a polyfunctional monomer, and ($D_5$) from 0.1 to 5 parts by weight, relative to 100 parts by weight of the total amount of ($D_1$) to ($D_4$), of a graftlinking agent, as an intermediate layer disposed between the polymer layers (A) and (C); and

the multi-layer structure polymer [II-2] is a rubber-containing polymer comprising

(A) from 2 to 35% by weight, based on the weight of the polymer [II-2], of an innermost polymer layer composed of from 51 to 100 parts by weight of an alkyl methacrylate having an alkyl group of at most 4 carbon atoms, from 0 to 49 parts by weight of other monomer having a copolymerizable double bond, from 0 to 10 parts by weight of a polyfunctional monomer, and from 0.1 to 5 parts by weight of a graftlinking agent, and having a glass transition temperature of at least 10°C,

(B) from 5 to 60% by weight, based on the weight of the polymer [II-2], of a center polymer layer composed of from 60 to 100 parts by weight of an alkyl acrylate having an alkyl group of at most 8 carbon atoms, from 0 to 40 parts by weight of other monomer having a copolymerizable double bond, from 0 to 10 parts by weight of a polyfunctional monomer, and from 0.1 to 5 parts by weight of a graftlinking agent, and having a glass transition temperature of at most 0°C and

(C) from 20 to 80% by weight, based on the weight of the polymer [II-2], of an outermost polymer layer composed of from 51 to 100 parts by weight of an alkyl methacrylate having an alkyl group of at most 4 carbon atoms, and from 0 to 49 parts by weight of other monomer having a copolymerizable double bond, and having a glass transition temperature of at least 50°C, as basic structural units, and

(D) zero or at least one layer of a copolymer composed of from 10 to 90 parts by weight of an alkyl methacrylate having an alkyl group of at most 4 carbon atoms, from 10 to 90 parts by weight of an alkyl acrylate having an alkyl group of at most 8 carbon atoms, from 0 to 10 parts by weight of a polyfunctional monomer, and from 0.1 to 5 parts by weight of a graftlinking agent, as an intermediate layer disposed between the polymer layers (A) and (B) or between the polymer layers (B) and (C).

Now, the present invention will be described in detail with reference to the preferred embodiments.

In order to maintain the high tensile strength of the acrylic resin, the amount of the rubber component to be incorporated must be limited. The rubber component can be measured as a gel content. If the gel content exceeds 50% of the film product, the tensile strength and tear strength of the shaped film tend to deteriorate, and the film will be unsuitable as a coating film for a high luminance reflector. On the other hand, if the amount of the rubber component is less than 10% as the gel content, the elongation at low temperatures tends to be low, whereby the film will be unsuitable as a coating film for a high luminance reflector which is often used outdoors. Thus, the amount of the rubber component as represented by the gel content should strictly be controlled. As a method for controlling the amount of the rubber component, the thermoplastic polymer [I] comprising an alkyl methacrylate as the main component is blended with the rubber-containing polymer [II] to obtain a thermoplastic composition. If a coating film for a high luminance reflector is made solely of the rubber-containing polymer [II], it is difficult to obtain a balance of the flowability during the film forming operation and the film strength, whereby it is difficult to obtain a good coating film. Therefore, it is necessary to blend the two types of the polymers. The polymer [I] and the rubber-containing [II] are blended in such a proportion that the gel content of the blend composition will be at least 10% by weight and not more than 50% by weight, and the blend comprises from 20 to 80 parts by weight of the polymer [I] and from 20 to 80 parts by weight of the rubber-containing polymer [II]. If the polymer [I] is less than 20 parts by weight, the gel content will exceed 50% and the strength of the film product tends to decrease, such being undesirable. On the other hand, if the polymer [I] exceeds 80 parts by weight, the gel content in the film product will be less than 10% by weight, such being undesirable.

In the present invention, the thermoplastic polymer [I] is a polymer obtained by polymerizing a monomer containing at least 50% by weight of an alkyl methacrylate having an alkyl group of from 1 to 4 carbon atoms, and is suitably selected to satisfy the above-mentioned properties depending upon the type of the rubber-containing polymer [II].

Thus, the physical properties suitable for a coating film for a high luminance reflector are obtainable for the first time by blending the alkyl methacrylate type polymer [I] with the rubber-containing polymer [II]. Now, the rubber-containing polymer [II] will be described in further detail.

Firstly, the multi-layer structure polymer [II-1] will be described.

The alkyl acrylate having an alkyl group of from 1 to 8 carbon atoms which constitutes the innermost polymer layer (A), may be straight chained or branched. As such an alkyl acrylate, methyl acrylate, ethyl acrylate, propyl acrylate, butyl acrylate, 2-ethylhexyl acrylate and n-octyl acrylate, may be used alone or in combination as a mixture. Among them, those having a low glass transition temperature (Tg) are preferred. Likewise, the alkyl methacrylate having an alkyl group of from 1 to 4 carbon atoms may be straight chained or branched. As such an alkyl methacrylate, methyl methacrylate, ethyl methacrylate, propyl methacrylate and butyl methacrylate, may be employed alone or in combination as a mixture. These alkyl (meth)acrylates ($A_1$) are used in an amount of from 80 to 100 parts by weight. These alkyl (meth)acrylates are preferably of the same type for all the layers. However, depending upon the desired purposes, two or more monomers may be mixed, or different types of acrylates may be employed to satisfy the present invention.

Said other monomer ($A_2$) having a copolymerizable double bond, is preferably an acrylic monomer

3

such as a lower alkyl acrylate, a lower alkoxy acrylate, cyanoethyl acrylate, acrylamide, acrylic acid or methacrylic acid. Such a copolymerizable monomer is used in an amount of from 0 to 20 parts by weight. In addition, styrene, an alkyl-substituted styrene, acrylonitrile, methacrylonitrile or the like may be used within a range not exceeding 20 parts by weight in component (A).

As the polyfunctional monomer ($A_3$), an alkylene glycol dimethacrylate such as ethylene glycol dimethacrylate, 1,3-butylene glycol dimethacrylate, 1,4-butylene glycol dimethacrylate or propylene glycol dimethacrylate is preferred, and a polyvinyl benzene such as divinylbenzene or trivinylbenzene and an alkylene glycol diacrylate may also be employed. Such a polyfunctional monomer ($A_3$) serves effectively to bridge the layer in which it is contained, and does not serve to bond the layer with other layers. Even if the polyfunctional monomer ($A_3$) is totally omitted, a fairly stable rubber-containing polymer composition can be obtained so long as the graftlinking agent ($A_4$) is present. However, the polyfunctional monomer ($A_3$) is optionally used depending upon the particular purpose, for instance, when a high level of hot strength is required. It is used in an amount of from 0 to 10 parts by weight.

On the other hand, as the graftlinking agent ($A_4$), a copolymerizable allyl, methallyl or crotyl ester of an $\alpha,\beta$-unsaturated carboxylic acid or dicarboxylic acid, is preferred, and an allyl ester of acrylic acid, methacrylic acid, maleic acid or fumaric acid may be mentioned. Allyl methacrylate shows particularly excellent effects. Further, triallyl cyanurate or triallyl isocyanurate is also effective. In such a graftlinking agent, mainly the conjugated unsaturated bond in its ester reacts far quicker than the allyl, methallyl or crotyl group, to establish a chemical bond. Meantime, a substantial portion of the allyl group, the methallyl group or the crotyl group reacts effectively to the polymer in the adjacent polymer layer to establish a graftlinkage between the adjacent two layers.

The amount of the graftlinking agent is extremely important, and is from 0.1 to 5 parts by weight, preferably from 0.5 to 2 parts by weight, per 100 parts by weight of the total amount of the above components ($A_1$) to ($A_3$). If the amount is less than 0.1 part by weight, the effective amount for the graftlinkage tends to be too small, whereby the bond between the layers will be inadequate.

The innermost polymer layer (A) gives excellent physical properties when the glass transition temperature (Tg) of its own is at most 0°C, preferably at most −30°C.

The content of the cross-linked elastic polymer in the multi-layer structure polymer [II-1] of the present invention i.e. the content of the innermost polymer layer (A) is preferably within a range of from 10 to 45% by weight.

The outermost polymer layer (C) constituting the multi-layer structure polymer [II-1] of the present invention, contributes to provide excellent moldability and mechanical properties to the polymer composition. Component ($C_1$) and component ($C_2$) may be equal to the above-mentioned component ($A_1$) and component ($A_2$). Component ($C_1$) is employed within a range of from 51 to 100 parts by weight, and likewise component ($C_2$) is used within a range of from 0 to 49 parts by weight.

The glass transition temperature (Tg) of the outermost polymer layer (C) alone is required to be at least 40°C, preferably at least 60°C, in order to obtain excellent solvent resistance or water and whitening resistance. The content of the outermost polymer layer (C) in the multi-layer structure polymer [II-1] is usually from 10 to 80% by weight, preferably from 40 to 60% by weight.

The multi-layer structure polymer [II-1] of the present invention comprises the above-mentioned innermost polymer layer (A) and the outermost polymer layer (C) as basic structural units, and (D) zero or at least one layer of a copolymer composed of ($D_1$) from 10 to 90 parts by weight of an alkyl acrylate having an alkyl group of from 1 to 8 carbon atoms, ($D_2$) from 10 to 90 parts by weight of an alkyl methacrylate having an alkyl group of from 1 to 4 carbon atoms, ($D_3$) from 0 to 20 parts by weight of other monomer having a copolymerizable double bond, ($D_4$) from 0 to 10 parts by weight of a polyfunctional monomer, and ($D_5$) from 0.1 to 5 parts by weight, relative to 100 parts by weight of the total amount of ($D_1$) to ($D_4$), of a graftlinking agent, as an intermediate layer disposed between the polymer layers (A) and (C). Here, components ($D_1$) to ($D_4$) and the graftlinking agent ($D_5$) are of the same types as those used in the innermost polymer layer (A). The graftlinking agent used for the intermediate layer (D) is essential to intimately bond the polymer layers and to obtain various excellent properties.

The content of the intermediate layer (D) in the multi-layer structure polymer [II-1] of the present invention is preferably from 5 to 35% by weight. If the amount is less than 5% by weight, no adequate function as the intermediate layer will be obtained. On the other hand, if the amount exceeds 35% by weight, the balance of the final polymer tends to be poor, such being undesirable.

Now, the multi-layer structure polymer [II-2] will be described.

The multi-layer structure polymer [II-2] is a rubber-containing polymer comprising from 2 to 35% by weight, based on the weight of the polymer [II-2], of an innermost polymer layer (A) composed of from 51 to 100 parts by weight of an alkyl methacrylate having an alkyl group of at most 4 carbon atoms, from 0 to 49 parts by weight of other monomer having a copolymerizable double bond, from 0 to 10 parts by weight of polyfunctional monomer and from 0.1 to 5 parts by weight of a graftlinking agent, and having a glass transition temperature of at least 10°C; from 5 to 60% by weight, based on the weight of the polymer [II-2], of a center polymer layer (B) composed of from 60 to 100 parts by weight of an alkyl acrylate having an alkyl group of at most 8 carbon atoms, from 0 to 40 parts by weight of other monomer having a copolymerizable double bond, from 0 to 10 parts by weight of a polyfunctional monomer, and from 0.1 to 5 parts by weight of a graftlinking agent, and having a glass transition temperature of at most 0°C; and from 20 to 80% by weight, based on the weight of the polymer [II-2], of an outermost polymer layer (C) composed of from 51 to 100 parts by weight of an alkyl methacrylate having an alkyl group of at most 4 carbon atoms, and from 0 to 49 parts by weight of other monomer having a copolymerizable double bond, and having a glass transition temperature of at least 50°C, as basic structural units; and zero or at least one layer of a copolymer composed of from 10 to 90 parts by weight of an alkyl methacrylate having an alkyl group of at most 4 carbon atoms, from 10 to 90 parts by weight of an alkyl acrylate having an alkyl group of at most 8 carbon atoms, from 0 to 10 parts by weight of a polyfunctional monomer, and from 0.1 to 5 parts by weight of a graftlinking agent, as an intermediate layer (D) disposed between the polymer layers (A) and (B) or between the polymer layers (B) and (C).

As the alkyl methacrylate of at most 4 carbon atoms to be used for the innermost layer (A), at least one of butyl methacrylate, propyl methacrylate, ethyl methacrylate and methyl methacrylate, is employed. It is particularly preferred to employ methyl methacrylate since it is thereby possible to obtain a composition having particularly good gloss and transparency.

As the monomer having a copolymerizable double bond, an acrylic derivative such as a lower alkyl acrylate, a lower alkoxy acrylate, cyanoethyl acrylate, acrylamide, acrylic acid or methacrylic acid, is preferred. In addition, a monomer copolymerizable with an alkyl methacrylate, such as styrene, an alkyl-substituted styrene, acrylonitrile or methacrylonitrile may be mentioned.

As the graftlinking agent, a copolymerizable allyl, methallyl or crotyl ester of an α,β-unsaturated monocarboxylic acid or dicarboxylic acid, or triallyl isocyanurate or triallyl cyanurate, may be employed in an amount of from 0.1 to 5 parts by weight.

The allyl ester includes allyl esters of acrylic acid, methacrylic acid, maleic acid, fumaric acid and itaconic acid. Allyl methacrylate exhibits particularly excellent effects.

The polyfunctional monomer contains a double bond conjugated with e.g. a carboxyl group, and generally, it reacts far more readily than the non-conjugated allyl, methallyl or crotyl group, to form a chemical bond. On the other hand, the allyl, methallyl and crotyl groups are slow in the reaction rates, and they remain in a substantial amount after the completion of the polymerization reaction of the layer, and thus they effectively serve for the reaction for the formation of the next layer i.e. they effectively serve to form the intimate bond of the two layers.

The graftlinking agent is used in an amount within a range of from 0.1 to 5 parts by weight, preferably from 0.5 to 2 parts by weight. If the amount is less than 0.1 part by weight, the effective amount of the graft linkage will be so small that when many intermediate layers are disposed, the interlayer breakage is likely to take place during the melt kneading for molding, and it is difficult to obtain a good film having a desired transparency and stress whitening resistance. On the other hand, if the amount exceeds 5 parts by weight, the excess amount serves to deteriorate the elasticity of the film, and the mechanical properties, particularly the impact strength, will be impaired, such being undesirable.

As the copolymerizable polyfunctional monomer, ethylene glycol dimethacrylate, 1,3-butylene glycol dimethacrylate, 1,4-butylene glycol dimethacrylate and propylene glycol dimethacrylate are preferred, and divinyl benzene and an alkylene glycol diacrylate may also be employed. These monomers effectively serve for the crosslinking of the layer in which they are incorporated, and they do not serve for the bonding with other layers.

Component (A) constitutes from 2 to 35% by weight, preferably from 3 to 10% by weight, in the polymer [II-2]. Likewise, the center rubber layer component (B) constitutes from 5 to 60% by weight in the polymer [II-2], and it preferably comprises from 80 to 100 parts by weight of an alkyl acrylate having an alkyl group of at most 8 carbon atoms, from 0 to 20 parts by weight of other monomer having a copolymerizable double bond, from 0.1 to 10 parts by weight of a polyfunctional monomer and from 0.1 to 5 parts by weight of a graftlinking agent. When measured alone, the polymer of the component (B) has a glass transition temperature (Tg) of at most 0°C, preferably at most −30°C.

The alkyl acrylate of at most 8 carbon atoms includes methyl acrylate, ethyl acrylate, butyl acrylate, propyl acrylate and 2-ethylhexyl acrylate. The lower the Tg of the homopolymer, the more advantageous.

The monomer having a copolymerizable double bond, the graftlinking agent and the polyfunctional monomer may be of the same types as described with respect to component (A).

The outermost layer (C) comprises from 51 to 100 parts by weight of an alkyl methacrylate having an alkyl group of at most 4 carbon atoms and from 0 to 49 parts by weight of other monomer having a copolymerizable double bond. The glass transition temperature (Tg) of the layer (C) itself should be at least 50°C. For the polymerization of the layer (C), it is preferred to control the polymerization degree by using a chain transfer agent, and the viscosity average molecular weight is preferably within a range of 50,000 to 1,000,000.

The alkyl methacrylate having an alkyl group of at most 4 carbon atoms and the monomer having a copolymerizable double bond to be used in the layer (C) are of the same types as used for the layer (A). The layer (C) constitutes from 20 to 80% by weight in the polymer [II-2]. If the amount is less than 20% by weight, it is difficult to obtain a stable polymer from the viewpoint of the production such as polymerization and coagulation. If the amount exceeds 80% by weight, the rubber content tends to be too low, whereby the impact strength of the blend product will be substantially lowered.

The intermediate layer (D) comprises from 10 to 90 parts by weight of an alkyl methacrylate having an alkyl group of at most 4 carbon atoms, from 10 to 90 parts by weight of an alkyl acrylate having an alkyl group of at most 8 carbon atoms, from 0 to 10 parts by weight of a polyfunctional monomer and from 0.1 to 5 parts by weight of a graftlinking agent, wherein the respective monomers may be of the same types as used for the layers (A), (B) and (C).

In the multi-layer structure polymer [II-2] of the present invention, the layers are effectively graft-linked by the graftlinking agent. Such a multi-layered structure is not susceptible to whitening even when a stress is applied and has excellent transparency in spite of the fact that a substantial amount of the rubber component is present in a block fashion.

Thus, it is a feature of the present invention that the rubber-containing polymer [II] to be blended is transparent by itself and free from stress whitening by its nature. By blending such a new structure rubber component to a resin like the polymer [I], it is possible to obtain thermoplastic polymer having various desired properties.

In the production of the rubber-containing polymer of the present invention, there is no particular restriction as to the particle size of the emulsion of the final polymer. However, when the particle size is within a range of from 80.0 to 200.0 nm, preferably from 100.0 to 160.0 nm, a well balanced structure is obtainable. Further, there is no particular restriction as to the surface active agent, catalyst, etc. to be used at the time of the production, and the salting-out treatment is conducted, if necessary, by adding additives such as antioxidant or lubricant.

As the method for the producton of the rubber-containing polymer, a sequential multi-stage polymerization method by emulsion polymerization is most suitable. However, the method is not limited to this sequential multi-stage polymerization method, and for instance, it is possible to employ a suspension polymerization method for the polymerization of the outermost polymer layer after the emulsion polymerization.

As a method for blending the above-mentioned rubber-containing polymer [II] to a polymer [I], any usual blending method may be employed, and if necessary, an antioxidant, a ultraviolet absorber, a filler, a pigment, etc. may be added.

Now, the present invention will be described in further detail with reference to Examples.

In the Examples, the following abbreviations will be used.

| | |
|---|---|
| MMA: | Methyl methacrylate |
| BuA: | Butyl acrylate |
| BMA: | Butyl methacrylate |
| 2EHA: | 2-Ethylhexyl acrylate |
| BD: | 1,3-Butylene dimethacrylate |
| AMA: | Allyl methacrylate |
| MA: | Methyl acrylate |
| CHP: | Cumene hydroperoxide |
| SFS: | Sodiumformaldehyde sulfoxylate |
| St: | Styrene |
| PMMA: | Polymethyl methacrylate |
| PSt: | Polystyrene |
| EMA: | Ethyl methacrylate |
| n-OSH: | n-Octyl mercaptan |

Method for measuring the gel content

In accordance with JIS K-6388, a predetermined amount of a thermoplastic polymer is sampled, and it is immersed in methyl ethyl ketone (hereinafter referred to as MEK) at 25°C for 48 hours for swelling, and then pulled out. After wiping off the deposited MEK, the weight of the sample was measured, and then the sample was dried in a reduced pressure dryer to remove MEK. When the weight becomes constant, the absolute dry weight is measured. The gel content is then calculated by the following equation.

$$\text{Gel content (\%)} = \frac{\text{Absolute dry weight}}{\text{Sampled weight}} \times 100$$

The glass transition temperature (Tg) of each polymer disclosed in the specification is a value obtained from the Tg values of the respective components in accordance with the commonly employed Fox equation:

$$\frac{1}{Tg} = \frac{a_1}{Tg_1} + \frac{a_2}{Tg_2}$$

Further, the total luminous transmittance, and the tear strength were measured by the following methods.

Total luminous transmittance:
Measured by an integrating sphere hazemeter in accordance with ASTM D 1003-61.

Tear strength:
Measured by Elemendorf method with a slit of 2 mm in accordance wiht JIS P-8116.

Examples 1 to 5 and Comparative Examples 1 and 2

Into a polymerization reactor equipped with a condenser, 250 parts by weight of ion exchanged water, 2 parts by weight of sodium salt of a sulfosuccinate ester and 0.05 part by weight of SFS, were charged. After stirring the mixture in a nitrogen atmosphere, a mixture of the respective monomers for the innermost polymer layer (A) as shown in Table 1 and 0.10 part by weight of CHP, were charged. The temperature was raised to 70°C, and maintained at that level for 60 minutes to complete the polymerization of the polymer (A).

Then, a mixture of the monomers for the intermediate layer (D) as shown in Table 1 was added and reacted thereto. Finally, the monomer mixture having a variety of composition for the outermost polymer layer (C) as shown in Table 1 was added and reacted thereto to form the outermost polymer layer (C) having a different glass transition temperature (Tg). In each case, the final particle size was within a range of from 100.0 to 150.0 nm. Each polymer emulsion thus obtained was subjected to salting-out by adding 5 parts by weight of calcium chloride, relative to 100 parts by weight of the polymer, and the polymer was washed and dried.

50 parts by weight of the rubber-containing polymer of Experiment 1 were blended with 50 parts by weight of MMA/MA copolymer (MMA/MA=99/1 by weight, $\eta$sp/C=0.60, C=0.10 g/dl) as the polymer [I] by using a Henschel mixer.

The above mixture was pelletized by using an extruder with a vent. Pellets thereby obtained were dried at 80°C for one day and night, and molded into a film having a thickness of 0.10 mm by using a T-die. The moldability was extremely good, and the obtained film had excellent transparency and high impact strength.

In a similar manner, 50 parts by weight of each of the rubber-containing polymers of Experiments 2 to 5, were blended with the polymer [I], and formed into a film as shown in Table 2. The tensile strength, tear strength and elongation at a low temperature of each film were measured, and the results are shown in Table 2.

All of the films obtained in Examples 1 to 5 showed good strength both at room temperature and at 0°C. Whereas, in the case of Comparative Example 1 wherein a film made solely of the methyl methacrylate resin was employed, the film elongation at 0°C was inadequate and the durability at a low temperature was found to be poor, although the film yield strength and tear strength were good.

Further, in the case of Comparative Example 2 wherein a film made solely of the rubber-containing polymer was employed, the film yield strength was low, and the film tear strength was so poor that the film was not practically useful.

## TABLE 1

| Experiment | Composition of rubber-containing polymer [II] (parts by weight) | | |
|---|---|---|---|
| 1 | MMA/BuA/BD/AMA 3.1/30.5/1.4/0.35 (−46.1°C) | MMA/BuA/AMA 5/5/0.1 (3.5°C) | MMA/BuA 52.25/2.75 (91.6°C) |
| 2 | 3.1/30.5/—/1.20 (−46.1°C) | 5/5/0.1 (3.5°C) | 52.25/2.75 (91.6°C) |
| 3 | MMA/BuA/St/AMA 5/20/5/1.30 (−19.2°C) | MMA/BuA/St/AMA 5/4/1/0.10 (19.2°C) | MMA/BuA/St 55/4/1 (87.4°C) |
| 4 | —/20/5/1.50 (−34.8°C) | — — — — | 75/—/— (10.5°C) |
| 5 | —/24/6/1.50 (−34.8°C) | — — — —. | 55/4/1 (87.4°C) |

7

TABLE 2

| | Composition of polymer blend | | | | Gel content % by weight | Physical properties of 0.1 mm film | | |
|---|---|---|---|---|---|---|---|---|
| | Polymer [I] | | Rubber-containing polymer [II] | | | Yield strength (20°C) kN/cm² | Tear strength N (g) | Elongation (0°C)% |
| | MMA/MA | Parts by weight | Type | Parts by weight | | | | |
| Example 1 | 99/1 | 50 | Experiment 1 | 50 | 29 | 5.10 | 3.33 (340) | 11 |
| Example 2 | 99/1 | 50 | Experiment 2 | 50 | 31 | 4.71 | 2.75 (280) | 8 |
| Example 3 | 99/1 | 50 | Experiment 3 | 50 | 26 | 5.20 | 3.24 (330) | 10 |
| Example 4 | 99/1 | 50 | Experiment 4 | 50 | 18 | 5.25 | 3.14 (320) | 7 |
| Example 5 | 99/1 | 50 | Experiment 5 | 50 | 22 | 5.25 | 3.04 (310) | 7 |
| Comparative Example 1 | 99/1 | 100 | — | 0 | 0 | 8.34 | 4.41 (450) | 0 |
| Comparative Example 2 | — | 0 | Experiment 1 | 100 | 59 | 2.75 | 1.08 (110) | 17 |

Examples 6 to 10 and Comparative Examples 3 and 4

The rubber-containing polymers of Experiments 1 and 3 prepared in the preceding Examples, were blended, respectively, with MMA/MA copolymer (MMA/MA=94/6 by weight ratio, ηsp/c=0.55, C=0.10 dl/g) in various ratios to obtain resin compositions. The physical properties of films prepared from these compositions, were measured, and the results are shown in Table 3.

When the rubber-containing polymer is less than 20 parts by weight, the film elongation at 0°C is inadequate, and the durability at a low temperature is poor. On the other hand, when it exceeds 80 parts by weight, the tear strength lowers, and it is difficult to obtain sufficient strength required for a coating film for a high luminance reflector.

The rubber-containing polymer of Experiment 3 has its refractive index adjusted to the refractive index of the MMA polymer as the matrix resin, and thus is capable of forming a coating film having extremely good transparency and excellent weather resistance.

TABLE 3

| | Composition of polymer blend | | | | | Physical properties of 0.1 mm film | | |
|---|---|---|---|---|---|---|---|---|
| | Polymer [I] | | Rubber-containing polymer [II] | | Gel content % by weight | Yield strength (20°C) kN/cm$^2$ | Tear strength N (g) | Elongation (0°C)% |
| | MMA/MA | Parts by weight | Type | Parts by weight | | | | |
| Example 6 | 94/6 | 30 | Experiment 1 | 70 | 41 | 3.53 | 2.06 (210) | 16 |
| Example 7 | 94/6 | 50 | Experiment 1 | 50 | 28 | 4.81 | 3.33 (340) | 11 |
| Example 8 | 94/6 | 70 | Experiment 1 | 30 | 17 | 5.30 | 3.73 (380) | 7 |
| Example 9 | 94/6 | 50 | Experiment 3 | 50 | 25 | 5.00 | 3.24 (330) | 8 |
| Example 10 | 94/6 | 30 | Experiment 3 | 70 | 36 | 3.82 | 1.96 (200) | 6 |
| Comparative Example 3 | 94/6 | 10 | Experiment 1 | 90 | 52 | 3.04 | 1.27 (130) | 20 |
| Comparative Example 4 | 94/6 | 90 | Experiment 3 | 10 | 5 | 6.67 | 3.92 (400) | 0 |

Examples 11 and 12

A rubber-containing polymer (Experiment 6) was prepared in the same manner as in Experiment 3 except that BMA was used instead of MMA in the rubber-containing polymer of Experiment 3.

Likewise, a rubber-containing polymer (Experiment 7) was prepared in the same manner as in Experiment 3 except that 2EHA was used instead of BuA in Experiment 3.

50 parts by weight of each of these rubber-containing polymers were blended with 50 parts by weight of the MMA/MA copolymer used in Example 1 to obtain a resin composition. A film having a thickness of 0.1 mm was prepared from each resin composition, and the film strength was measured to obtain the results in Table 4. In each case, the film was found to be excellent as a coating film for a high luminance reflector.

11

TABLE 4

| | Composition of polymer blend | | | | Physical properties of 0.1 mm film | | |
|---|---|---|---|---|---|---|---|
| | Polymer [I] | | Rubber-containing polymer [II] | | Yield strength (20°C) kN/cm$^2$ | Tear strength N (g) | Elongation (0°C)% |
| | MMA/MA | Parts by weight | Type | Parts by weight | | | |
| Example 11 | 99/1 | 50 | Experiment 6 | 50 | 4.22 | 2.75 (280) | 8 |
| Example 12 | 99/1 | 50 | Experiment 7 | 50 | 4.51 | 3.04 (310) | 7 |

Examples 13 to 17 and Comparative Examples 5 and 6

(1) Preparation of rubber-containing polymers [II]

Into a reactor equipped with a condenser, 250 parts by weight of ion exchanged water, 1.5 parts by weight of sodium salt of a sulfosuccinate ester and 0.85 part by weight of SFS, were charged. After stirring the mixture in a nitrogen stream, 7 parts by weight of MMA, 3 parts by weight of BuA and 0.05 part of AMA were charged. In MMA, 0.1% by weight, relative to MMA, of CHP was dissolved. Likewise, in all monomers added in the subsequent steps, 0.1% by weight, relative to the respective monomers, of CHP was contained, unless otherwise specified. The reactor was heated to a temperature of 75°C under stirring at a rotational speed of 200 rpm in a nitrogen stream, and the stirring was continued for 30 minutes to complete the polymerization of the layer (A). Then, a mixture comprising 25 parts by weight of BuA, 4.5 parts by weight of MMA, 0.25 part by weight of AMA and 0.5 part by weight of BD, was added over a period of 30 minutes, and further maintained for 40 minutes to complete the polymerization of the rubber layer (B). Further, a component for the outermost layer (C) comprising 54 parts by weight of MMA, 6 parts by weight of BuA and 0.16 part by weight of n-OSH, was added and polymerized over a period of 60 minutes. After the completion of the addition, the temperature was maintained for 30 minutes to complete the polymerization of the outermost layer (C), to obtain a multi-layer structure polymer [II] composed of three layers. This polymer corresponds to the multi-layer polymer (i) in Table 5. A test sample was sampled after the completion of the polymerization of each layer, and observed by an electron microscope, whereby it was confirmed that no new particles were formed during the polymerization of the layers (B) and (C) and seed polymerization was taken place during the polymerization of such layers. The emulsion thus obtained, was subjected to salting-out, coagulation and solidification by using aluminum chloride, and the polymer was collected by filtration, washed with water and dried to obtain a dry powder.

Multi-layer structure polymer (ii), (iii), (iv) and (v) as identified in Table 5, were prepared in the same polymerization method as mentioned above.

(2) Preparation of blend resin compositions

50 Parts by weight of the multi-layer structure polymer (i) were blended with 50 parts by weight of MMA/MA copolymer (MMA/MA=99/1 by weight ratio, ηsp/c=0.60 at C=0.10 g/dl) as the polymer [I] by using a Henschel mixer.

The above mixture was pelletized by using an extruder with a vent (screw, L/D=24). (Resin temperature 250°C).

Pellets thus obtained, were dried at 80°C for one day and night, and molded into a film having a thickness of 0.1 mm by using a T-die. The results are shown as Example 13 in Table 6. The moldability of the polymer blend in Example 13 into a sheet was extremely good, and the film had high transparency and impact strength and excellent weather resistance. In a similar manner, 50 parts by weight of the multi-layer structure polymers (ii) to (v) were blended, respectively, with the above-mentioned polymer [I], and films of Examples 14 to 17 were prepared. All of these films had excellent transparency, weather resistance and impact resistance.

The gel contents of the blend compositions and the physical properties of the films thus obtained, were measured, and the results are shown in Table 6.

In each of the Examples, the film shows high values for the yield strength, the elongation at 0°C and the tensile strength. Whereas in the case of Comparative Example 5 wherein a methyl methacrylate homopolymer was used, the film elongation at 0°C is low, and the durability at a low temperature is poor. In the case of Comparative Example 6 wherein the multi-layer structure polymer was used alone, the yield strength of the film is low, and the tear strength is low, and as such, the film is not suitable as a film for a high luminance reflector.

## EP 0 210 450 B1

### TABLE 5

| Multi-layer structure polymers [II] | Composition of multi-layer structure polymers (parts by weight) | | | |
|---|---|---|---|---|
| (i) | MMA/BuA/AMA<br>7/3/0.05<br>(36.8°C) | MMA/BuA/AMA/BD<br>4.5/25/0.25/0.5<br>(−40.0°C) | MMA/BuA<br>54/6<br>(79.2°C) | |
| (ii) | MMA/BuA/AMA<br>5/2/0.05<br>(39.5°C) | MMA/BuA/AMA/BD<br>3/37/0.4/—<br>(−47.9°C) | MMA/BuA/AMA<br>6/4/0.1<br>(19.2°C) | MMA/BuA<br>40/3<br>(86.6°C) |
| (iii) | 5/2/0.05<br>(39.5°C) | 3/20/0.3/1<br>(−42.3°C) | 6/3/0.1<br>(30.7°C) | 50/3<br>(89.9°C) |
| (iv) | MMA/BuA/St/AMA<br>7/2.4/0.6/0.05<br>(48.4°C) | MMA/BuA/St/AMA/BD<br>4.5/20/5/0.25/0.5<br>(−20.6°C) | MMA/BuA/St/AMA<br>54/4.8/1.2/0<br>(84.0°C) | MMA/BuA/St<br>— |
| (v) | 5/1.6/0.4/0.05<br>(50.7°C) | 3/29.6/7.4/0.4/—<br>(−28.0°C) | 6/3.2/0.8/0.1<br>(33.1°C) | 4.0/2.4/0.6<br>(90.1°C) |

14

TABLE 6

| | Composition of polymer blend | | | | Gel content % by weight | Physical properties of 0.1 mm film | | |
|---|---|---|---|---|---|---|---|---|
| | Polymer [I] | | Rubber-containing polymer [II] | | | Yield strength (20°C) kN/cm² | Tear strength N (g) | Elongation (0°C)% |
| | MMA/MA | Parts by weight | Type | Parts by weight | | | | |
| Example 13 | 99/1 | 50 | (i) | 50 | 30.0 | 5.30 | 3.43 (350) | 10 |
| Example 14 | 99/1 | 50 | (ii) | 50 | 35.0 | 4.81 | 3.24 (330) | 7 |
| Example 15 | 99/1 | 50 | (iii) | 50 | 30.0 | 5.00 | 3.33 (340) | 8 |
| Example 16 | 99/1 | 50 | (iv) | 50 | 25.3 | 5.20 | 2.84 (290) | 7 |
| Example 17 | 99/1 | 50 | (v) | 50 | 32.6 | 4.95 | 3.04 (310) | 9 |
| Comparative Example 5 | 99/1 | 100 | — | 0 | 0 | 8.34 | 4.22 (430) | 0 |
| Comparative Example 6 | — | 0 | (i) | 100 | 60.0 | 2.84 | 1.08 (110) | 15 |

Examples 18 to 22 and Comparative Examples 7 and 8

The multi-layer structure polymers (i) and (v) prepared in Example 13, were blended, respectively, with MMA/MA copolymer (MMA/MA=94/6 by weight ratio, sp/c=0.55 dl/g) in various ratios to obtain resin compositions. The physical properties of the films prepared from these compositions, and the durability of high luminance reflectors wherein the films are used, were measured, and the results are shown in Table 7.

When the multi-layer structure polymer (i) is less than 20% by weight, the elongation at 0°C is inadequate, and the durability at a low temperature is poor. On the other hand, when it exceeds 80% by weight, the tear strength lowers, and it becomes difficult to obtain sufficient strength required for a coating film as a high luminance reflector.

The multi-layer structure polymer (v) has its refractive index corrected, and thus is capable of forming a coating film having excellent transparency and weather resistance, which exhibits extremely good transparency in any region.

TABLE 7

| | Composition of polymer blend | | | | | Physical properties of 0.1 mm film | | |
|---|---|---|---|---|---|---|---|---|
| | Polymer [I] | | Rubber-containing polymer [II] | | Gel content % by weight | Yield strength (20°C) kN/cm$^2$ | Tear strength N (g) | Elongation (0°C)% |
| | MMA/MA | Parts by weight | Type | Parts by weight | | | | |
| Example 18 | 94/6 | 30 | (i) | 70 | 42 | 3.73 | 2.35 (240) | 18 |
| Example 19 | 94/6 | 50 | (i) | 50 | 30 | 4.81 | 3.14 (320) | 11 |
| Example 20 | 94/6 | 70 | (i) | 30 | 18 | 5.69 | 3.82 (390) | 6 |
| Example 21 | 94/6 | 50 | (v) | 50 | 32.6 | 4.95 | 3.43 (350) | 9 |
| Example 22 | 94/6 | 30 | (v) | 70 | 45.6 | 4.51 | 2.94 (300) | 12 |
| Comparative Example 7 | 94/6 | 10 | (i) | 90 | 54 | 3.24 | 1.27 (130) | 21 |
| Comparative Example 8 | 94/6 | 90 | (v) | 10 | 6.5 | 6.37 | 4.02 (410) | 0 |

EP 0 210 450 B1

Examples 23 to 25

A multi-layer structure polymer (vi) was prepared in the same manner as in the case of the multi-layer structure polymer (iii) in Example 13 except that BMA was used instead of MMA. Likewise, a multi-layer structure polymer (vii) was prepared by using EMA instead of MMA.

Likewise, a multi-layer structure polymer (viii) was prepared in the same manner as in the case of the polymer (iii) by using 2EHA instead of BuA.

50 parts by weight of these multi-layer structure polymers (vi), (vii) and (viii) were blended, respectively, with 50 parts by weight of MMA/MA copolymer (MMA/MA=99/1 by weight ratio) to obtain resin compositions (Examples 23, 24 and 25). 0.1 mm films were prepared from these compositions, and the respective film strength was measured. The results are shown in Table 8, from which it was found that the films were useful as coating films for high luminance reflectors.

TABLE 8

| | Composition of polymer blend | | | | Physical properties of 0.1 mm film | | |
| | Polymer [I] | | Rubber-containing polymer [II] | | | | |
| | MMA/MA | Parts by weight | Type | Parts by by weight | Yield strength (20°C) kN/cm$^2$ | Tear strength N (g) | Elongation (0°C)% |
|---|---|---|---|---|---|---|---|
| Example 23 | 99/1 | 50 | (vi) | 50 | 4.02 | 2.84 (290) | 8 |
| Example 24 | 99/1 | 50 | (vii) | 50 | 4.22 | 3.24 (330) | 7 |
| Example 25 | 99/1 | 50 | (viii) | 50 | 4.61 | 3.43 (350) | 9 |

As described in detail in the foregoing, films obtained by the present invention have excellent transparency, high tensile strength and tear strength, and excellent durability at low temperatures, and by their application to the surface of high luminance reflectors, it is possible to obtain high luminance reflectors having excellent properties.

**Claims**

1. A coating film for a high luminance reflector obtainable by extrusion of a blend consisting essentially of

I from 20 to 80 parts by weight of a thermoplastic polymer and II from 20 to 80 parts by weight of at least one rubber-containing polymer selected from multi-layer structure polymers II-1 and II-2 as obtained by emulsion polymerization, and having a gel content of from 10 to 50% by weight, wherein:

the thermoplastic polymer [I] is a polymer comprising from 50 to 100% by weight of an alkyl methacrylate having an alkyl group of from 1 to 4 carbon atoms and from 0 to 50% by weight of at least one other monoethylenically unsaturated monomer copolymerizable therewith;

the multi-layer structure polymer [II-1] is a rubber-containing polymer comprising

(A) an innermost polymer layer composed of ($A_1$) from 80 to 100 parts by weight of an alkyl acrylate having an alkyl group of from 1 to 8 carbon atoms or an alkyl methacrylate having an alkyl group of from 1 to 4 carbon atoms, ($A_2$) from 0 to 20 parts by weight of other monomer having a copolymerizable double bond, ($A_3$) from 0 to 10 parts by weight of a polyfunctional monomer, and ($A_4$) from 0.1 to 5 parts by weight, relative to 100 parts by weight of the total amount of ($A_1$) to ($A_3$), of a graftlinking agent and

(C) an outermost polymer layer composed of ($C_1$) from 51 to 100 parts by weight of an alkyl methacrylate having an alkyl group of from 1 to 4 carbon atoms, and ($C_2$) from 0 to 49 parts by weight of other monomer having a copolymerizable double bond, and having a glass transition temperature (Tg) of at least 40°C, as basic structural units, and

(D) zero or at least one layer of a copolymer composed of ($D_1$) from 10 to 90 parts by weight of an alkyl acrylate having an alkyl group of from 1 to 8 carbon atoms, ($D_2$) from 10 to 90 parts by weight of an alkyl methacrylate having an alkyl group of from 1 to 4 carbon atoms, ($D_3$) from 0 to 20 parts by weight of other monomer having a copolymerizable double bond, ($D_4$) from 0 to 10 parts by weight of a polyfunctional monomer, and ($D_5$) from 0.1 to 5 parts by weight, relative to 100 parts by weight of the total amount of ($D_1$) to ($D_4$), of a graftlinking agent, as an intermediate layer disposed between the polymer layers (A) and (C); and

the multi-layer structure polymer [II-2] is a rubber-containing polymer comprising

(A) from 2 to 35% by weight, based on the weight of the polymer [II-2], of an innermost polymer layer composed of from 51 to 100 parts by weight of an alkyl methacrylate having an alkyl group of at most 4 carbon atoms, from 0 to 49 parts by weight of other monomer having a copolymerizable double bond, from 0 to 10 parts by weight of a polyfunctional monomer, and from 0.1 to 5 parts by weight of a graftlinking agent, and having a glass transition temperature of at least 10°C,

(B) from 5 to 60% by weight, based on the weight of the polymer [II-2], of a center polymer layer composed of from 60 to 100 parts by weight of an alkyl acrylate having an alkyl group of at most 8 carbon atoms, from 0 to 40 parts by weight of other monomer having a copolymerizable double bond, from 0 to 10 parts by weight of a polyfunctional monomer, and from 0.1 to 5 parts by weight of a graftlinking agent, and having a glass transition temperature of at most 0°C; and

(C) from 20 to 80% by weight, based on the weight of the polymer [II-2], of an outermost polymer layer composed of from 51 to 100 parts by weight of an alkyl methacrylate having an alkyl group of at most 4 carbon atoms, and from 0 to 49 parts by weight of other monomer having a copolymerizable double bond, and having a glass transition temperature of at least 50°C, as basic structural units, and

(D) zero or at least one layer of a copolymer composed of from 10 to 90 parts by weight of an alkyl methacrylate having an alkyl group of at most 4 carbon atoms, from 10 to 90 parts by weight of an alkyl acrylate having an alkyl group of at most 8 carbon atoms, from 0 to 10 parts by weight of a polyfunctional monomer, and from 0.1 to 5 parts by weight of a graftlinking agent, as an intermediate layer disposed between the polymer layers (A) and (B) or between the polymer layers (B) and (C).

2. The coating film according to Claim 1, which has a tensile strength of at least 3,43 kN/cm² (350 kg/cm²), a tear strength of at least 1,47 N (150 g) and an elongation of at least 5% at 0°C.

3. The coating film according to Claim 1, wherein the multi-layer structure polymer [II-2] comprises:

(A) from 2 to 35% by weight, based on the weight of the polymer [II-2], of an innermost polymer layer composed of from 51 to 100 parts by weight of an alkyl methacrylate having an alkyl group of at most 4 carbon atoms, from 0 to 49 parts by weight of other monomer having a copolymerizable double bond, from 0 to 10 parts by weight of a polyfunctional monomer and from 0.1 to 5 parts by weight of a graftlinking agent, and having a glass transition temperature of at least 10°C,

(B) from 5 to 60% by weight, based on the weight of the polymer [II-2], of a center polymer layer composed of from 80 to 100 parts by weight of an alkyl acrylate having an alkyl group of at most 8 carbon atoms, from 0 to 20 parts by weight of other monomer having a copolymerizable double bond, from 0 to 10 parts by weight of a polyfunctional monomer and from 0.1 to 5 parts by weight of a graftlinking agent, and having a glass transition temperature of at most 0°C and

20

(C) from 20 to 80% by weight, based on the weight of the polymer [II-2], of an outermost polymer layer composed of from 51 to 100 parts by weight of an alkyl methacrylate having an alkyl group of at most 4 carbon atoms, and from 0 to 49 parts by weight of other monomer having a copolymerizable double bond, and having a glass transition temperature of at least 50°C, as basic structural units, and

(D) zero or at least one layer of a copolymer composed of from 10 to 90 parts by weight of an alkyl methacrylate having an alkyl group of at most 4 carbon atoms, from 10 to 90 parts by weight of an alkyl acrylate having an alkyl group of at most 8 carbon atoms, from 0 to 10% by weight of a polyfunctional monomer and from 0.1 to 5 parts by weight of a graftlinking agent, as an intermediate layer disposed between the polymer layers (A) and (B) or between the polymer layers (B) and (C).

## Patentansprüche

1. Schutzschicht für eine Rückstrahleinrichtung (Reflektor) mit hoher Leuchtdichte, wobei die Schutzschicht durch Extrudieren einer Mischung erhätlich ist, die im wesentlichen aus [I] 20 bis 80 Masseteilen eines thermoplastischen Polymers und [II] 20 bis 80 Masseteilen mindestens eines kautschukhaltigen Polymers, das aus Polymeren [II-1] und [II-2] mit Mehrschichtstruktur, die durch Emulsionspolymerisation erhalten werden, ausgewählt ist, besteht und einen Gelgehalt von 10 bis 50 Masse% hat, wobei:

das thermoplastische Polymer [I] ein Polymer ist, das 50 bis 100 Masse% eines Alkylmethacrylats mit einer 1 bis 4 Kohlenstoffatome enthaltenden Alkylgruppe und 0 bis 50 Masse% mindestens eines anderen, damit copolymerisierbaren monoethylenisch ungesättigten Monomers enthält,

das Polymer [II-1] mit Mehrschichtstruktur ein kautschukhaltiges Polymer ist, das als Grundstruktureinheiten

(A) eine innerste Polymerschicht, die aus $(A_1)$ 80 bis 100 Masseteilen eines Alkylacrylats mit einer 1 bis 8 Kohlenstoffatome enthaltenden Alkylgruppe oder eines Alkylmethacrylats mit einer 1 bis 4 Kohlenstoffatome enthaltenden Alkylgruppe, $(A_2)$ 0 bis 20 Masseteilen eines anderen Monomers mit einer copolymerisierbaren Doppelbindung, $(A_3)$ 0 bis 10 Masseteilen eines polyfunktionellen Monomers und $(A_4)$ 0,1 bis 5 Masseteilen, bezogen auf 100 Masseteile der Gesamtmenge von $(A_1)$ bis $(A_3)$, eines Pfropfverbindungsmittels besteht, und

(C) eine äußerste Polymerschicht, die aus $(C_1)$ 51 bis 100 Masseteilen eines Alkylmethacrylats mit einer 1 bis 4 Kohlenstoffatome enthaltenden Alkylgruppe und $(C_2)$ 0 bis 49 Masseteilen eines anderen Monomers mit einer copolymerisierbaren Doppelbindung besteht und eine Glasumwandlungstemperatur (Tg) von mindestens 40°C hat,

und als Zwischenschicht, die zwischen den Polymerschichten (A) und (C) angeordnet ist,

(D) keine Schicht oder mindestens eine Schicht aus einem Copolymer, das aus $(D_1)$ 10 bis 90 Masseteilen eines Alkylacrylats mit einer 1 bis 8 Kohlenstoffatome enthaltenden Alkylgruppe $(D_2)$ 10 bis 90 Masseteilen eines Alkylmethacrylats mit einer 1 bis 4 Kohlenstoffatome enthaltenden Alkylgruppe, $(D_3)$ 0 bis 20 Masseteilen eines anderen Monomers mit einer copolymerisierbaren Doppelbindung, $(D_4)$ 0 bis 10 Masseteilen eines polyfunktionellen Monomers und $(D_5)$ 0,1 bis 5 Massteilen, bezogen auf 100 Masseteile der Gesamtmenge von $(D_1)$ bis $(D_4)$, eines Pfropfverbindungsmittels besteht, aufweist und

das Polymer [II-2] mit Mehrschichtstruktur ein kautschukhaltiges Polymer ist, das als Grundstruktureinheiten

(A) 2 bis 35 Masse%, bezogen auf die Masse des Polymers [II-2], einer innersten Polymerschicht, die aus 51 bis 100 Masseteilen eines Alkylmethacrylats mit einer höchstens 4 Kohlenstoffatome enthaltenden Alkylgruppe, 0 bis 49 Masseteilen eines anderen Monomers mit einer copolymerisierbaren Doppelbindung, 0 bis 10 Masseteilen eines polyfunktionellen Monomers und 0,1 bis 5 Masseteilen eines Pfropfverbindungsmittels besteht und eine Glasumwandlungstemperatur (Tg) von mindestens 10°C hat,

(B) 5 bis 60 Masse%, bezogen auf die Masse des Polymers [II-2], einer mittleren Polymerschicht, die aus 60 bis 100 Masseteilen eines Alkylacrylats mit einer höchstens 8 Kohlenstoffatome enthaltenden Alkylgruppe, 0 bis 40 Masseteilen eines anderen Monomers mit einer copolymerisierbaren Doppelbindung, 0 bis 10 Masseteilen eines polyfunktionellen Monomers und 0,1 bis 5 Masseteilen eines Pfropfverbindungsmittels besteht und eine Glasumwandlungstemperatur von höchstens 0°C hat, und

(C) 20 bis 80 Masse%, bezogen auf die Masse des Polymers [II-2], einer äußersten Polymerschicht, die aus 51 bis 100 Masseteilen eines Alkylmethacrylats mit einer höchstens 4 Kohlenstoffatome enthaltenden Alkylgruppe und 0 bis 49 Masseteilen eines anderen Monomers mit einer copolymerisierbaren Doppelbindung besteht und eine Glasumwandlungstemperatur von mindestens 50°C hat, und als Zwischenschicht, die zwischen den Polymerschichten (A) und (B) oder zwischen den Polymerschichten (B) und (C) angeordnet ist,

(D) keine Schicht oder mindestens eine Schicht aus einem Copolymer, das aus aus 10 bis 90 Masseteilen eines Alkylmethacrylats mit einer höchstens 4 Kohlenstoffatome enthaltenden Alkylgruppe, 10 bis 90 Masseteilen eines Alkylacrylats mit einer höchstens 8 Kohlenstoffatome enthaltenden Alkylgruppe, 0 bis 10 Masseteilen eines polyfunktionellen Monomers und 0,1 bis 5 Masseteilen eines Pfropfverbindungsmittels besteht, aufweist.

2. Schutzschicht nach Anspruch 1, die eine Zugfestigkeit von mindestens 3,43 kN/cm² (350 kg/cm²),

21

eine Weiterreißfestigkeit von mindestens 1,47 N (150 g) und eine Dehnung bzw. Reißdehnung von mindestens 5% bei 0°C hat.

3. Schutzschicht nach Anspruch 1, bei dem das Polymer [II-2] mit Mehrschichtstruktur als Grundstruktureinheiten

(A) 2 bis 35 Masse%, bezogen auf die Masse des Polymers [II-2], einer innersten Polymerschicht, die aus 51 bis 100 Masseteilen eines Alkylmethacrylats mit einer höchstens 4 Kohlenstoffatome enthaltenden Alkylgruppe, 0 bis 49 Masseteilen eines anderen Monomers mit einer copolymerisierbaren Doppelbindung, 0 bis 10 Masseteilen eines polyfunktionellen Monomers und 0,1 bis 5 Masseteilen eines Pfropfverbindungsmittels besteht und eine Glasumwandlungstemperatur (Tg) von mindestens 10°C hat,

(B) 5 bis 60 Masse%, bezogen auf die Masse des Polymers [II-2], einer mittleren Polymerschicht, die aus 80 bis 100 Masseteilen eines Alkylacrylats mit einer höchstens 8 Kohlenstoffatome enthaltenden Alkylgruppe, 0 bis 20 Masseteilen eines anderen Monomers mit einer copolymerisierbaren Doppelbindung, 0 bis 10 Masseteilen eines polyfunktionellen Monomers und 0,1 bis 5 Masseteilen eines Pfropfverbindungsmittels besteht und eine Glasumwandlungstemperatur von höchstens 0°C hat, und

(C) 20 bis 80 Masse%, bezogen auf die Masse des Polymers [II-2], einer äußersten Polymerschicht, die aus 51 bis 100 Masseteilen eines Alkylmethacrylats mit einer höchstens 4 Kohlenstoffatome enthaltenden Alkylgruppe und 0 bis 49 Masseteilen eines anderen Monomers mit einer copolymerisierbaren Doppelbindung besteht und eine Glasumwandlungstemperatur von mindestens 50°C hat, und als Zwischenschicht, die zwischen den Polymerschichten (A) und (B) oder zwischen den Polymerschichten (B) und (C) angeordnet ist,

(D) keine Schicht oder mindestens eine Schicht aus einem Copolymer, das aus aus 10 bis 90 Masseteilen eines Alkylmethacrylats mit einer höchstens 4 Kohlenstoffatome enthaltenden Alkylgruppe, 10 bis 90 Masseteilen eines Alkylacrylats mit einer höchstens 8 Kohlenstoffatome enthaltenden Alkylgruppe, 0 bis 10 Masseteilen eines polyfunktionellen Monomers und 0,1 bis 5 Masseteilen eines Pfropfverbindungsmittels besteht, aufweist.

## Revendications

1. Un film de revêtement pour réflecteur à grande luminance pouvant être obtenu par extrusion d'un mélange essentiellement constitué de

[I] de 20 à 80 parties en poids d'un polymère thermoplastique et [II] de 20 à 80 parties en poids d'au moins un polymère contenant du caoutchouc choisi parmi les polymères à structure multicouche [II-1] et [II-2] tels qu'obtenus par polymérisation en émulsion, et présentant une teneur en gel de 10 à 50% en poids, où:

le polymère thermoplastique [I] est un polymère comprenant de 50 à 100% en poids d'un méthacrylate d'alkyle comportant un groupe alkyle renfermant de 1 à 4 atomes de carbone, et de 0 à 50% en poids d'au moins un autre monomère à insaturation éthylénique copolymérisable avec le précédent;

le polymère à structure multicouche [II-1] est un polymère contenant du caoutchouc comprenant

(A) une couche de polymère la plus interne composée de $(A_1)$ de 80 à 100 parties en poids d'un acrylate d'alkyle comportant un groupe alkyle renfermant de 1 à 8 atomes de carbone ou d'un méthacrylate d'alkyle comportant un groupe alkyle renfermant de 1 à 4 atomes de carbone, $(A_2)$ de 0 à 20 parties en poids d'autre monomère ayant une double liaison copolymérisable, $(A_3)$ de 0 à 10 parties en poids d'un monomère polyfonctionnel, et $(A_4)$ de 0,1 à 5 parties en poids, rapportées à 100 parties en poids du total des constituants $(A_1)$ à $(A_3)$, d'un agent de greffage et

(C) une couche de polymère la plus externe composée de $(C_1)$ de 51 à 100 parties en poids d'un méthacrylate d'alkyle comportant un groupe alkyle renfermant de 1 à 4 atomes de carbone, et $(C_2)$ de 0 à 49 parties en poids d'autre monomère ayant une double liaison copolymérisable, et présentant une température de transition vitreuse (Tg) d'au moins 40°C, comme motifs structuraux de base, et

(D) zéro ou au moins une couche d'un copolymère composé de $(D_1)$ de 10 à 90 parties en poids d'un acrylate d'alkyle comportant un groupe alkyle renfermant de 1 à 8 atomes de carbone, $(D_2)$ de 10 à 90 parties en poids d'un méthacrylate d'alkyle comportant un groupe alkyle renfermant de 1 à 4 atomes de carbone, $(D_3)$ de 0 à 20 parties en poids d'autre monomère possédant une double liaison copolymérisable, $(D_4)$ de 0 à 10 parties en poids d'un monomère polyfonctionnel, et $(D_5)$ de 0,1 à 5 parties en poids, rapportées à 100 parties en poids du total des constituants $(D_1)$ à $(D_4)$, d'un agent de greffage, formant une couche intermédiaire située entre les couches de polymères (A) et (C); et

le polymère à structure multicouche [II-2] est un polymère contenant du caoutchouc comprenant

(A) de 2 à 35% en poids, rapportés au poids du polymère [II-2], d'une couche de polymère la plus interne composée de 51 à 100 parties en poids d'un méthacrylate d'alkyle comportant un groupe alkyle renfermant au plus 4 atomes de carbone, de 0 à 49 parties en poids d'autre monomère ayant une double liaison copolymérisable, de 0 à 10 parties en poids d'un monomère polyfonctionnel, et de 0,1 à 5 parties en poids d'un agent de greffage, et présentant une température de transition vitreuse d'au moins 10°C,

(B) de 5 à 60% en poids, rapportés au poids du polymère [II-2], d'une couche de polymère centrale composée de 60 à 100 parties en poids d'un acrylate d'alkyle comportant un groupe alkyle renfermant au plus 8 atomes de carbone, de 0 à 40 parties en poids d'autre monomère présentant une double liaison

22

copolymérisable, de 0 à 10 parties en poids d'un monomère polyfonctionnel, et de 0,1 à 5 parties en poids d'un agent de greffage, et présentant une température de transition vitreuse d'au plus 0°C; et

(C) de 20 à 80% en poids, rapportés au poids du polymère [II-2], d'une couche de polymère la plus externe composée de 51 à 100 parties en poids d'un méthacrylate d'alkyle comportant un groupe alkyle renfermant au plus 4 atomes de carbone, et de 0 à 49 parties en poids d'autre monomère possédant une double liaison copolymérisable, et présentant une température de transition vitreuse d'au moins 50°C, comme motifs structuraux de base, et

(D) zéro ou au moins une couche d'un copolymère composé de 10 à 90 parties en poids d'un méthacrylate d'alkyle comportant un groupe alkyle renfermant au plus 4 atomes de carbone, de 10 à 90 parties en poids d'un acrylate d'alkyle comportant un groupe alkyle renfermant au plus 8 atomes de carbone, de 0 à 10 parties en poids d'un monomère polyfonctionnel, et de 0,1 à 5 parties en poids d'un agent de greffage, formant une couche intermédiaire située entre les couches de polymères (A) et (B) ou entre les couches de polymères (B) et (C).

2. Le film de revêtement selon la revendication 1, qui présente une résistance à la traction d'au moins 3,43 kN/cm² (350 kg/cm²), une résistance au déchirement d'au moins 1,47 N (150 g) et un allongement d'au moins 5% à 0°C.

3. Le film de revêtement selon la revendication 1, dans lequel le polymère à structure multicouche [II-2] comprend:

(A) de 2 à 35% en poids, rapportés au poids du polymère [II-2], d'une couche de polymère la plus interne composée de 51 à 100 parties en poids d'un méthacrylate d'alkyle comportant un groupe alkyle renfermant au plus 4 atomes de carbone, de 0 à 49 parties en poids d'autre monomère possédant une double liaison copolymérisable, de 0 à 10 parties en poids d'un monomère polyfonctionnel et de 0,1 à 5 parties en poids d'un agent de greffage, et présentant une température de transition vitreuse d'au moins 10°C,

(B) de 5 à 60% en poids, rapportés au poids du polymère [II-2], d'une couche de polymère centrale composée de 80 à 100 parties en poids d'un acrylate d'alkyle comportant un groupe alkyle renfermant au plus 8 atomes de carbone, de 0 à 20 parties en poids d'autre monomère présentant une double liaison copolymérisable, de 0 à 10 parties en poids d'un monomère polyfonctionnel et de 0,1 à 5 parties en poids d'un agent de greffage, et présentant une température de transition vitreuse d'au plus 0°C,

(C) de 20 à 80% en poids, rapportés au poids du polymère [II-2], d'une couche de polymère la plus externe composée de 51 à 100 parties en poids d'un méthacrylate d'alkyle comportant un groupe alkyle renfermant au plus 4 atomes de carbone, et de 0 à 49 parties en poids d'autre monomère possédant une double liaison copolymérisable, et présentant une double liaison copolymérisable, et présentant une température de transition vitreuse d'au moins 50°C, comme motifs structuraux de base, et

(D) zéro ou au moins une couche d'un copolymère composé de 10 à 90 parties en poids d'un méthacrylate d'alkyle comportant un groupe alkyle renfermant au plus 4 atomes de carbone, de 10 à 90 parties en poids d'un acrylate d'alkyle comportant un groupe alkyle renfermant au plus 8 atomes de carbone, de 0 à 10% en poids d'un monomère polyfonctionnel et de 0,1 à 5 parties en poids d'un agent de greffage, formant une couche intermédiaire située entre les couches de polymères (A) et (B) ou entre les couches de polymères (B) et (C).